# EUROPÄISCHE PATENTSCHRIFT

(11) **EP 0 416 065 B1**
(45) Veröffentlichungstag und Bekanntmachung des Hinweises auf die Patenterteilung: **20.10.1993**
(21) Anmeldenummer: 90904282.2
(22) Anmeldetag: 16.02.1990
(51) Int. Cl.: F28D 20/00

(54) **WÄRMESPEICHER MIT EXPANSIONSAUSNEHMUNGEN**
STORAGE HEATER WITH EXPANSION RECESSES
ACCUMULATEUR THERMIQUE AVEC CAVITES D'EXPANSION

(30) Priorität: 24.02.1989 DE 3905706
(43) Veröffentlichungstag der Anmeldung: 13.03.1991
(73) Patentinhaber: DEUTSCHE FORSCHUNGSANSTALT FÜR LUFT- UND RAUMFAHRT e.V., 53111 Bonn (DE)
(72) Erfinder: LINDNER, Friedrich, D-7022 Leinfelden-Echterdingen 1 (DE); STÄHLE, Hans-Jörg, D-7024 Filderstadt 1 (DE); TATTERMUSCH, Peter, D-7031 Altdorf (DE)
(74) Vertreter: Hoeger, Stellrecht & Partner
(86) Internationale Anmeldenummer: EP9000250
(87) Internationale Veröffentlichungsnummer: WO9010187

(56) Entgegenhaltungen:
- WO-A-85/00212
- DE-B- 2 919 250
- GB-A- 2 084 311
- GB-A- 2 127 330
- US-A- 4 696 338
- Patent Abstracts of Japan, volume 13, No. 55 (M-795) (3403), 8 February 1989, & JP-A-63259390 (HITACHI LTD) 26 October 1988
- Patent Abstracts of Japan, volume 13, No. 526 (M-897)(3874), 22 November 1989, & JP-A-1212983 (AGENCY OF IND SCIENCE & TECHNOL) 25 August 1989

## Beschreibung

Die Erfindung betrifft einen Wärmespeicher, umfassend einen Speicherbehälter mit einem zur Wärmeeinleitung vorgesehenen Wandbereich und ein in diesem Speicherbehälter angeordnetes Speichermedium.

Zur Speicherung von Wärme bei hohen Temperaturen sind beispielsweise Alkali- oder Erdalkali-Fluoride oder deren Eutektika aufgrund ihrer hohen Schmelzwärme sehr gut geeignet. Zur Kapselung dieses Speichermediums werden hochlegierte Stähle oder Reinstnickel eingesetzt, um die Korrosion zu reduzieren und bei den hohen Temperaturen eine genügend große Festigkeit des Speicherbehälters gewährleisten zu können.

Die Kapselung des Speichermediums in derartigen Speicherbehältern ist sehr problematisch, da dieses Speichermedium beim Schmelz- oder Erstarrungsprozeß großen Volumenänderungen in der Größenordnung von 20 bis 30 % unterliegt, wobei das vollständig geschmolzene Speichermedium gegenüber dem erstarrten ein um 20 bis 30 % größeres Volumen aufweist. Die Volumenkontraktion führt beim Erstarren des Speichermediums zur Bildung von Hohlräumen (Lunkern) im Innern des Speichermediums.

Diese Volumenänderungen führen beim Schmelzprozeß zu Problemen, da das Speichermedium beim Erwärmen des Wärmespeichers zunächst in seinem den Wänden des Speicherbehälters zugewandten Bereich zu schmelzen beginnt, wobei dann das geschmolzene Speichermedium ein ungefähr 30 % größeres Volumen aufweist. Solange jedoch noch erstarrtes Speichermedium in dem Speicherbehälter festliegt, muß dem geschmolzenem Speichermedium zusätzliches Volumen zur Verfügung gestellt werden, soll es nicht den Speicherbehälter deformieren, weil die Lunker zunächst die Volumenzunahme nicht kompensieren können. Bei den bisher bekannten Speicherbehältern war es nicht möglich, dem geschmolzenen Speichermedium noch zusätzliches Volumen zur Verfügung zu stellen. Der Speicherbehälter muß so stabil sein, daß das geschmolzene Speichermedium das noch erstarrte Speichermedium verschieben konnte, um sich das nötige Volumen zu verschaffen. Es wurde zwar versucht, dadurch Abhilfe zu schaffen, daß ins Innere des Speicherbehälters Wärmeleitbleche eingesetzt wurden. Diese haben sich jedoch aufgrund der Volumenänderungen des Speichermediums in unkontrollierter Weise verbogen.

Darüberhinaus wurde die mechanische Stabilität des Speicherbehälters auch noch dadurch beeinträchtigt, daß insbesondere an den Schweißnähten Korrosionsprobleme auftraten.

Aus der GB-A-2 084 311 ist ein Wärmespeicher bekannt, welcher eine hohle Kugel mit einer Wandfläche umfaßt, welche an ihrer Innenseite mit einer Kapillarstruktur versehen ist oder keine Kapillarstruktur aufweist. In der hohlen Kugel ist ein Wärmespeichermaterial vorgesehen, und zusätzlich für den Fall, daß die Kugel nur teilweise mit dem Latentwärmespeichermaterial gefüllt ist, ein Inertgas. Dabei kommt als Latentwärmespeichermaterial Metall, beispielsweise Natrium, Aluminium oder für hohe Temperaturen Silber oder eine chemische Verbindung wie beispielsweise LiH, LiF, MgF₂ oder ähnliches in Frage.

Der Erfindung liegt daher die Aufgabe zugrunde, einen Wärmespeicher der gattungsgemäßen Art derart zu verbessern, daß dieser eine möglichst lange Lebensdauer hat und insbesondere einer Vielzahl von Schmelz- und Erstarrungsprozessen standhält.

Diese Aufgabe wird erfindungsgemäß dadurch gelöst, daß der Wandbereich mit zum Speichermedium hin offenen Ausnehmungen versehen ist,daß eine dem Speichermedium zugewandte Wandfläche des Wandbereichs aus einem vom Speichermedium nicht benetzbaren Material ist und daß in den Ausnehmungen einander zugewandte Wandflächen einen derartigen Abstand voneinander aufweisen, daß das Speichermedium aufgrund der Kapillarkräfte in diese im vollständig flüssigen Zustand nicht oder nur zum Teil eindringt.

Der Vorteil der erfindungsgemäßen Lösung ist darin zu sehen, daß durch die Ausbildung der Wandfläche aus einem vom Speichermedium nicht benetzbaren Material bereits jegliche Art von Korrosionsschäden unterbunden werden und daß außerdem durch die Ausnehmungen zusätzliches Volumen geschaffen wurde, in welche das Speichermedium zwar in vollständig flüssigem Zustand im wesentlichen nicht eindringt und somit auch im erstarrten Zustand nicht eindringt, in welche es jedoch beim Schmelzprozeß dann, wenn der aufgeschmolzene Teil des Speichermediums aufgrund der Volumenzunahme unter erhöhtem Druck steht, entgegen der Wirkung der Kapillarkräfte eindringen kann, so daß der Speicherbehälter keinen verstärkten Druckkräften ausgesetzt ist. Sobald dann ein hinreichend großer Teil des Speichermediums geschmolzen ist, wird dieses die Möglichkeit haben, in die beim Erstarrungsprozeß aufgrund der Volumenkontraktion im Innern des Speichermediums entstandenen Hohlräume einzudringen, so daß eine Druckentlastung auftritt und letztlich dann, im vollständig flüssigen Zustand, keine zusätzlichen Kräfte mehr vorhanden sind, aufgrund welcher das Speichermedium entgegen der Wirkung der Kapillarkräfte in die Ausnehmungen eindringen wird.

Bei einem nachfolgenden Erstarrungsprozeß wird das Speichermedium dann wiederum, ohne in die Ausnehmungen einzudringen, erstarren, so daß beim darauffolgenden Schmelzprozeß wiederum das Volumen der Ausnehmungen zur Aufnahme des geschmolzenen Teils des Speichermediums zur Verfügung steht. Ein derartiger Wärmespeicher läßt sich besonders vorteilhaft in der Raumfahrt einsetzen.

Um zu gewährleisten, daß der Wärmespeicher gegen seine Umgebung, insbesondere Luft, beständig und/oder gasdicht ist, ist vorgesehen, daß Außenflächen des Wärmespeichers mit einer oder mehreren Schutzschichten aus Metall und/oder Keramik überzogen sind. Unter Außenflächen sind dabei nicht dem Speichermedium zugewandte Oberflächen zu verstehen.

Insbesondere mit einem Speichermedium, welches mit dem Material der Wandflächen nicht chemisch reagiert, ist eine vorteilhafte Ausführungsform des erfindungsgemäßen Wärmespeichers geschaffen, da dieser eine sehr hohe Langzeitstabilität aufweist.

Ein vorteilhaftes Speichermedium ist Aluminium.

Bevorzugte Speichermedien sind auch Salze und Salzhydrate oder diese umfassende Eutektika.

Wie bereits eingangs erwähnt, bieten aufgrund der hohen Schmelzwärme Alkali- und Erdalkali-Halogenide oder diese umfassende Eutektika als Speichermedium große Vorteile, wobei deren hohe Reaktionsfähigkeit aufgrund der nichtbenetzbaren Wandflächen zu keiner Korrosion führt.

Als besonders zweckmäßig hat es sich erwiesen, wenn die einander zugewandten Wandflächen der Ausnehmungen im wesentlichen quer zu einer Oberfläche des sich zwischen den Wandflächen erstreckenden Speichermediums verlaufen, da dann in besonders günstiger Weise die Möglichkeit geschaffen ist, daß das sein Volumen beim Schmelzen vergrößernde Speichermedium in den Ausnehmungen zusätzliches Volumen finden kann.

Vorzugsweise ist die Dimension der Ausnehmungen so zu wählen, daß die Ausnehmungen in mindestens einer Richtung einen Abstand der Wandflächen aufweisen, welcher kleiner als ungefähr 6 mm ist. Derartige Abmessungen reichen insbesondere dann, wenn das Speichermedium keinen Gravitationskräften ausgesetzt ist, vollkommen aus. Noch vorteilhafter ist es, wenn der Abstand der Wandflächen kleiner als ungefähr 4 mm ist. Optimale Werte werden erzielt bei Abständen zwischen den Wandflächen von kleiner als ungefähr 2 mm, vorzugsweise kleiner als ungefähr 1 mm. Die letztgenannten Werte sind insbesondere beim Auftreten von auf das Speichermedium wirkenden Gravitationskräften von Bedeutung, da die Kapillarkräfte dann so groß sein müssen, daß sie auch diesen entgegenwirken.

Die vorstehend beschriebenen Ausführungsformen waren hinsichtlich der Art des Querschnitts der Ausnehmungen nicht näher spezifiziert. So ist es denkbar, daß die Ausnehmungen einen rechteckigen oder U-förmigen Querschnitt aufweisen. Besonders vorteilhaft ist es jedoch, wenn die Ausnehmungen mit sich zum Speichermedium hin konisch erweiternden Wandflächen versehen sind, so daß beispielsweise im Fall von als Nuten ausgebildeten Ausnehmungen diese einen V-förmigen Querschnitt haben.

Bei den bisher beschriebenen Ausführungsbeispielen des erfindungsgemäßen Wärmespeichers wurde nicht näher spezifiziert, wie das vom Speichermedium nicht benetzbare Material beschaffen sein soll. Als besonders geeignet hat sich hierbei eine Lösung erwiesen, bei welcher die dem Speichermedium zugewandte Wandfläche Graphit umfaßt. Noch beser ist es hinsichtlich der Korrosionsbeständigkeit, wenn die dem Speichermedium zugewandte Wandfläche aus Graphit ist. Um eine bessere Wärmeleitung der Wand des Speicherbehälters zu erreichen, ist vorgesehen, daß in eine die Wandfläche tragende Wand des Speicherbehälters Metalle eingelagert sind, wobei es sich vorzugsweise um eingelagerte Metallsplitter handelt.

Ferner ist es vorteilhaft, wenn in eine die Wandfläche tragende Wand keramische Fasern eingelagert sind, welche dazu dienen, die mechanische Stabilität und Beständigkeit der Wand und somit des Speicherbehälters zu verbessern.

Neben der Tatsache, daß die Wandflächen vorzugsweise Graphit umfassen oder aus Graphit sind, ist es außerdem möglich, daß auch die Wand des Speicherbehälters Graphit umfaßt.

Als Alternative zu Graphit als ein vom Speichermedium nicht benetzbares Material ist es ebenfalls denkbar, wenn die Wandflächen Kohlenstoffasern umfassen und noch vorteilhafter, wenn die Wandflächen aus Kohlenstoffasern sind.

Ferner ist es ebenfalls denkbar, wenn eine die Wandfläche tragende Wand des Speicherbehälters Kohlenstoffasern umfaßt, welche gleichzeitig zur Stabilisierung derselben dienen.

Bei den bislang beschriebenen Ausführungsbeispielen wurde nicht näher darauf eingegangen, inwieweit ein Innenraum des Speicherbehälters im optimalen Fall gefüllt ist. Es ist grundsätzlich möglich, den Innenraum des Speicherbehälters nur zum Teil zu füllen. Besonders vorteilhaft ist jedoch eine Lösung, bei welcher ein Innenraum des Speicherbehälters bis auf die Ausnehmungen mit Speichermedium im flüssigen Zustand im wesentlichen gefüllt ist, so daß zum einen der Innenraum zur Speicherung einer möglichst grossen Wärmemenge optimal ausgenutzt ist und andererseits stets das Speichermedium beim Schmelzprozeß die Möglichkeit hat, die Ausnehmungen zur Volumenvergrößerung zu nutzen. Insbesondere dann, wenn man eine möglichst optimale Wärmeankopplung des Speichermediums an den Speicherbehälter erreichen möchte, ist es besonders zweckmäßig, wenn der Innenraum des Speicherbehälters so weit gefüllt ist, daß das Speichermedium im vollständig flüssigen Zustand geringfügig in die Ausnehmungen eindringt.

Bei den bislang beschriebenen Ausführungsbeispielen wurde nicht näher darauf eingegangen, wie die Ausnehmungen ausgebildet sein sollen. So sieht ein bevorzugtes Ausführungsbeispiel vor, daß der Wandbereich Nuten aufweist, wobei es sich bei den Nuten um Längs-, Spiral- oder Ringnuten handeln kann.

Alternativ dazu ist es ebenfalls denkbar, daß der Wandbereich nebeneinander angeordnete, nicht zusammenhängende Vertiefungen aufweist, die z.B. zylindrisch, rechteckig oder bienenwabenartig ausgeführt sein können.

Die Ausnehmungen brauchen jedoch nicht definiert mechanisch hergestellt sein. So ist es ebenfalls denkbar, daß der Wandbereich mit porösem, vom Speichermedium nicht benetztem Material versehen ist, durch welches ebenfalls die Möglichkeit geschaffen wird, daß das Speichermedium beim Schmelzprozeß in das poröse Material eindringt, sich jedoch in vollständig flüssigem Zustand wieder aus diesem zurückzieht.

Eine Realisierungsmöglichkeit eines derartigen porösen, vom Speichermedium nicht benetzten Materials ist die Verwendung von Vliesen, beispielsweise Kohlenstoffvlies. Eine weitere Realisierungsmöglichkeit ist die Verwendung von Geweben oder Gestricken.

Alternativ dazu ist es aber auch möglich, daß es sich bei dem porösen Material um vom Speichermedium nicht benetzbares offenporiges Schaummaterial handelt, wobei das Schaummaterial vorzugsweise Graphitschaum ist.

In der nachfolgenden Beschreibung werden an Hand der zeichnerischen Dastellung einige Ausführungsbeispiele beschrieben. In der Zeichnung zeigen:
Fig. 1 eine geschnittene perspektivische Darstellung eines ersten Ausführungsbeispiels eines erfindungsgemäßen Wärmespeicher;
Fig. 2 einen vergrößerten Ausschnitt aus Fig. 1 ohne Speichermedium;
Fig. 3 den vergrößerten Ausschnitt gemäß Fig. 2 mit Speichermedium;
Fig. 4 eine perspektivische aufgeschnittene Darstellung einer zweiten Ausführungsbeispiels des erfindungsgemäßen Wärmespeichers;
Fig. 5 eine teilweise perspektivische Darstellung eines dritten Ausführungsbeispiels des erfindungsgemäßen Wärmespeichers;
Fig. 6 eine Darstellung ähnlich Fig. 5 eines vierten Ausführungsbeispiels;
Fig. 7 eine Darstellung ähnlich Fig. 1 eines fünften Ausführungsbeispiels des erfindungsgemäßen Wärmespeichers und
Fig. 8 eine Darstellung ähnlich Fig. 7 eines sechsten Ausführungsbeispiels des erfindungsgemäßen Wärmespeichers.

Ein erstes Ausführungsbeispiel eines als Ganzes mit 10 bezeichneten Wärmespeichers umfaßt ein als Speicherbehälter dienendes zylinderförmiges Speicherrohr 12, dessen Wand 14 einen Innenraum 16 umschließt, welcher einen zylindrischen Teilraum 18 sowie von diesem in radialer Richtung zu einer Achse 20 des Speicherrohres 12 in die Wand eindringende sowie sich in Richtung der Achse 20 erstrekkende Längsnuten 22 umfaßt.

Dem Speicherrohr 12 als Ganzes wird entweder Wärme zu- oder abgeführt, so daß die gesamte Wand 14 des Speicherrohrs 12 zur Wärmeeinleitung und Wärmeableitung dient. Hierzu ist beispielsweise ein das Speicherrohr 12 umschließender Wärmetauscher 24 vorgesehen, welcher beispielsweise als eine das Speicherrohr 12 umschließende Manschette 25 mit Kanälen 23 für ein Wärmeträgermedium ausgebildet ist. Ebensogut können solche Speicherrohre 12 in Heat Pipes eingebaut werden, wodurch als besonderer Vorteil Isothermie auf der gesamten Außenwandung der Speicherrohre 12 erzielt wird.

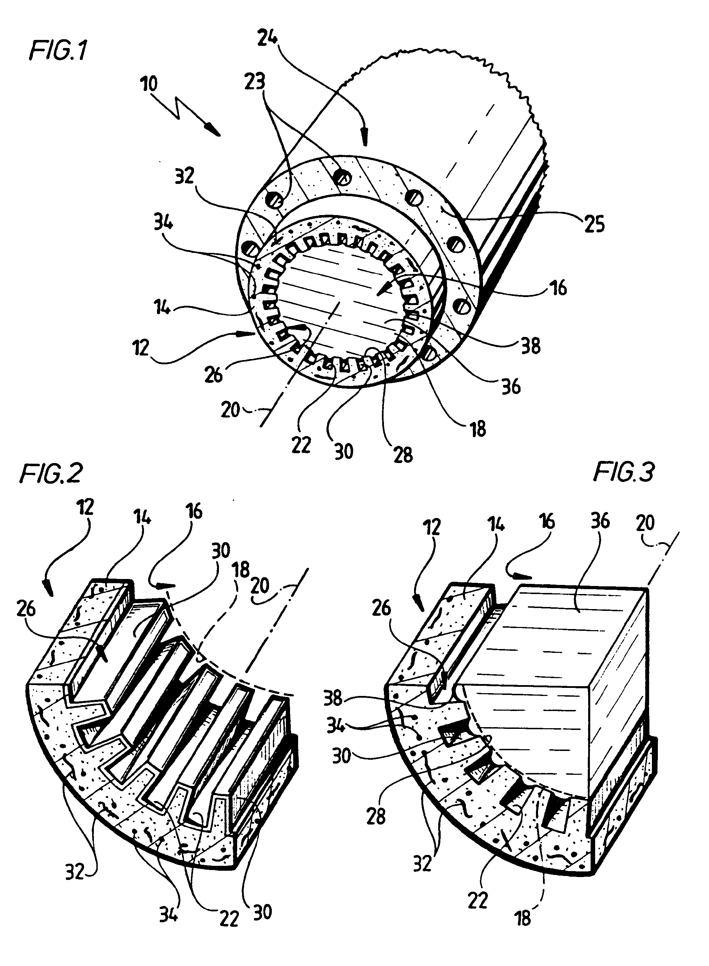

Wie in Fig. 2 dargestellt, grenzt die Wand 14 mit einer Wandfläche 26 an den Innenraum 16 an, wobei die Wandfläche 26 einen Teilbereich aufweist, welcher eine Zylinderwandfläche 28 des zylindrischen Teilraums 18 bildet und einen Teilbereich, welcher eine Nutwandfläche 30 der Längsnuten 22 bildet.

Die Wandfläche ist aus einem vom Speichermedium, das heißt von den Alkali- oder Erdalkali-Halogeniden nicht benetzbaren Material. Vorzugsweise handelt es sich hierbei um Graphit oder Kohlestoffasern.

Die Wand 14 kann ihrerseits ebenfalls Graphit oder Kohlenstoffasern umfassen. Vorzugsweise sind jedoch zur Verstärkung keramische Fasern 32 eingelagert und außerdem zur Verbesserung der Wärmeleitfähigkeit Metallteilchen 34. In jedem Fall ist jedoch die Wand 14 so aufgebaut, daß in der dem Innenraum 16 zugewandten Wandfläche 26 die Wand 14 lediglich Graphit oder Kohlenstoffasern aufweist und weder die eingelagerten Metallteilchen 34 noch die keramischen Fasern 32 beinhaltet.

Um zu verhindern, daß das Speichermedium, das heißt die Alkali- und Erdalkali-Halogenide oder deren Eutektika im vollständig flüssigen Zustand ohne zusätzlich auf diese wirkende Kraft in die Längsnuten 22 eindringen, haben die einander zugewandten Nutwandflächen 30 einen Abstand voneinander, der kleiner als ungefähr 6 mm, bevorzugterweise 2 mm, ist. Ein derartiger Abstand der Nutwandflächen 30 führt dazu, daß das Speichermedium aufgrund seiner Oberflächenspannung und der Tatsache, daß es die Wandflächen 26 nicht benetzt, nicht in die Längsnuten 22 eindringt.

Vorzugsweise wird daher das Speicherrohr 12 so gefüllt, daß das Speichermedium 36 im vollständig flüssigen Zustand den zylindrischen Teilraum 18 ausfüllt, jedoch im wesentlichen nicht in die Längsnuten 22 eindringt.

Ein derartiger Füllzustand ist in Fig.3 dargestellt, gemäß welcher das Speichermedium in jeder Längsnut 22 eine im Querschnitt meniskusförmige Oberfläche 38 aufweist, die sich zwischen den Nutwandflächen 30 im Bereich des Übergangs zwischen den Nutwandflächen 30 und den Zylinderwandflächen 28 ausbildet, wobei im Idealfall eine geringfügige Erstreckung des Speichermediums 36 in die Längsnuten 22 erfolgt, um einen möglichst guten Wärmekontakt zwischen dem Speichermedium 36 und dem Speicherrohr 12, insbesondere dessen Wand 14,herzustellen. Hierzu ist es besonders günstig, die Kanten der aneinander angrenzenden Flächen 28, 30 zu runden.

Vorzugsweise sind die einander zugewandten Wandflächen 26 dabei so orientiert, daß sie quer zu der Oberfläche 38 verlaufen und dadurch eine optimale Ausbildung der Oberflächenspannung im Bereich der Oberfläche 38 begünstigen, die das Eindringen des Speichermediums 36 in die Längsnuten 22 verhindert.

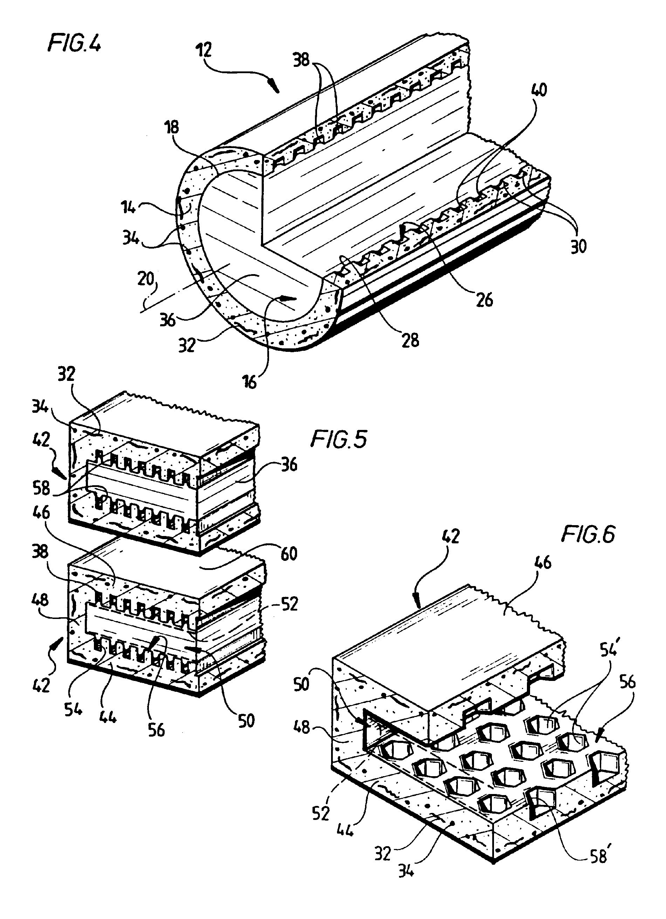

Bei einem zweiten Ausführungsbeispiel des Wärmetauschers, dargestellt in Fig. 4, sind in dem Speicherrohr 12 nicht Längsnuten 22, sondern Quernuten 40 vorgesehen, welche entweder lediglich in radialer Richtung nebeneinanderliegend angeordnet sind oder eine in radialer Richtung verlaufende Spirale bilden.

Bei einem dritten Ausführungsbeispiel des Wärmespeichers ist der Speicherbehälter aus plattenförmigen Hohlkörpern 42 aufgebaut, welche einen durch eine untere Wand 44 und eine obere Wand 46 sowie eine diese beiden miteinander in ihrem Randbereich verbindende ringsumlaufende Außenwand 48 abgeschlossenen Innenraum 50 aufweisen. Dieser Innenraum 50 umfaßt einen rechteckplattenförmigen Teilraum 52 mit im wesentlichen der gleichen Erstreckung wie die untere Wand 44 oder die obere Wand 46 und von diesem ausgehende, sich jeweils in die untere Wand 44 oder in die obere Wand 46 erstreckende Ausnehmungen 54, welche vorzugsweise als einzelne oder zusammenhängende Nuten ausgebildet sein können.

Die untere Wand 44, die obere Wand 46 und die Außenwand 48 sind im Prinzip genau gleich wie die Wand 14 aufgebaut, das heißt die Wand selbst kann zur Verstärkung keramische Fasern 32 und zur Verbesserung der Wärmeleitung Metallteilchen 34 umfassen und zusätzlich auch noch Graphit oder Kohlenstoffasern, und die dem Innenraum 50 zugewandten Wandflächen 56 umfassen entweder Graphit- oder Kohlenstoffasern, welche durch das Speichermedium nicht benetzbar sind.

Die Abstände einander zugewandter Wandflächen 58 der Ausnehmungen sind ebenfalls so gewählt, daß das Speichermedium 36 in diese im vollständig flüssigen Zustand nicht eindringt, das heißt sie haben ebenfalls einen Abstand von vorzugsweise weniger als 6 mm.

Vorzugsweise sind die plattenförmigen Hohlkörper 42 zur Bildung eines Wärmespeichers übereinander gestapelt, wobei sie Zwischenräume 60 bilden, welche von einem flüssigen oder gasförmigen Wärmetauschermedium durchströmt sein können. Alternativ besteht aber ebenfalls die Möglichkeit, die untere Wand 44 und die obere Wand 46 jeweils mit Kanälen für das Wärmetauschermedium zu versehen.

Bei einem vierten Ausführungsbeispiel, dargestellt in Fig.6, welches eine Variante des zweiten Ausführungsbeispiels darstellt, sind insoweit als dieselben Teile Verwendung finden, diese auch mit denselben Bezugszeichen versehen. In Abweichung vom ersten Ausführungsbeispiel sind die Ausnehmungen 54' keine Nuten, sondern bienenwabenförmig angeordnet, so daß einander zugewandte Wandflächen 58' der Ausnehmungen 54' vorzugsweise die Wandflächen eines sechseckigen Hohlzylinders bilden, der sich von dem Teilraum 52 in die untere Wand 44 und in die obere Wand 46 hineinerstreckt. Diese Ausbildung der Ausnehmungen hat den Vorteil, daß eine größere Stabilität der unteren Wand 44 und der oberen Wand 46 erreichbar ist.

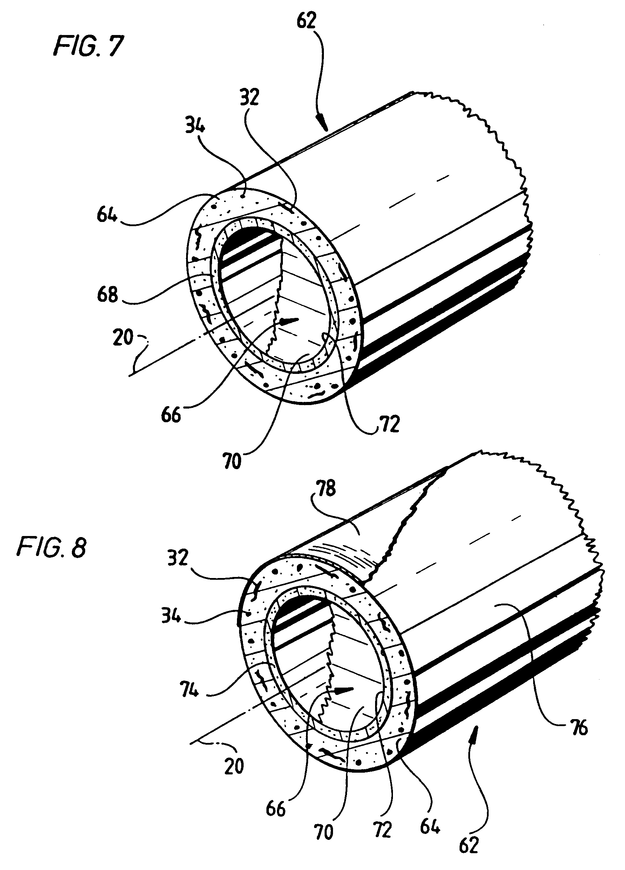

Bei einem fünften Ausfürungsbeispiel des Wärmespeichers, dargestellt in Fig. 7, ist der Speicherbehälter ebenfalls als Speicherrohr 62 aufgebaut, dessen Wand 64 auf ihrer einem zylindrischen Innenraum 66 zugewandten Seite ein Kohlenstoffvlies oder ein Gewebe aus Kohlenstofffasern 68 trägt, das heißt kohlenstoffaserhaltiges Material, das seinerseits als Ausnehmungen im Sinne der Erfindung dienende Zwischenräume zwischen den Kohlenstoffasern beinhaltet, die ebenfalls so klein sind, daß ein im zylindrischen Innenraum angeordnetes Speichermedium 70 aufgrund der Oberflächenspannung und ohne Einwirkung zusätzlicher Kräfte nicht in den Kohlenstoffvlies oder das Gewebe 68 eindringt, da die einander zugewandten Wandflächen der Kohlenstoffasern einen Abstand haben, der kleiner als 6 mm ist.

Die Wand 64 kann ihrerseits zur Verstärkung keramische Fasern 32 und zur Verbesserung der Wärmeleitung Metallteilchen 34 umfassen. Sie muß jedoch so ausgebildet sein, daß ihre dem Kohlenstoffvlies oder Gewebe 68 zugewandte Innenfläche 72 lediglich aus Graphit oder Kohlenstoff ist.

Bei einem sechsten Ausführungsbeispiel, welches eine Abwandlung des fünften Ausführungsbeispiels darstellt, sind dieselben Teile, insoweit als sie mit dem vierten identisch sind, mit denselben Bezugszeichen versehen. Anstelle des Kohlenstoffvlieses oder Gewebes 68 ist jedoch zwischen dem zylindrischen Innenraum 66 und der Wand 64 Kohlenstoffschaummaterial 74 angeordnet, welches offenporig ist und damit ebenfalls dem zylindrischen Innenraum 66 zugewandte Poren als Ausnehmungen aufweist, deren einander zugewandte Wandflächen einen kleineren Abstand als 6 mm haben, so daß das Speichermedium 70 in diese im vollständig flüssigen Zustand ohne Einwirkung zusätzlicher Kräfte nicht eindringen kann.

Bei einer bevorzugten Variante des sechsten Ausführungsbeispiels sind dessen Außenflächen 76 mit einer Schutzschicht 78 aus Metall und/oder Keramik überzogen, um diese gegen Umgebungseinflüsse beständig und/oder gasdicht zu gestalten.

Der Wärmespeicher funktioniert nun folgendermaßen:

Die als Speichermedium vogesehenen Alkali- oder Erdalkali-Halogenide oder deren Eutektika haben die Eigenschaft, daß beim Übergang vom festen Zustand zur Schmelze eine Volumenänderung in der Größenordnung von 20 bis 30 % auftritt.

Durch die Tatsache, daß das im vollständig flüssigen Zustand, das heißt im erwärmten Zustand, sich befindliche Speichermedium nicht in die Längsnut 22 oder die Ausnehmungen 54, die Zwischenräume des Kohlenstoffvlieses oder Gewebes 68 oder die Poren des Kohlenstoffschaummaterials 74 eindringt, ist auch das im erstarrten, also abgekühlten Zustand vorliegende Speichermedium nicht in die Längsnuten 22, die Ausnehmungen 54, die Zwischenräume des Kohlenstoffvlieses oder Gewebes 68 oder die Poren des Kohlenstoffschaummaterials 74 eingedrungen. Das erstarrte Speichermedium hat aufgrund seines kleineren Volumens in seinem Innern einen oder mehrere Lunker. Wird dem Speicherbehälter nun Wärme zugeführt, so beginnt das Speichermedium zunächst mit seiner dem Speicherbehälter zugewandten Oberfläche zu schmelzen, wobei sich dabei die geschmolzenen Volumenteile in der vorstehend genannten Größenordnung aus dehnen, jedoch aufgrund des noch in erheblichem Maße vorliegenden festen Speichermediums daran gehindert sind, sich unter Ausnutzung der Lunker gleichmäßig im gesamten zur Verfügung stehenden Innenraum mit Ausnahme der Längsnuten 22, der Ausnehmungen 54, des Zwischenraumes des Kohlenstoffvlieses oder Gewebes 68 oder der Poren des Kohlenstoffschaummaterials auszudehnen. In diesem Zustand kommen nun diese Längsnuten 22, die Ausnehmungen 54, die Zwischenräume des Kohlenstoffvlieses oder Gewebes 68 oder die Poren des Kohlenstoffschaummaterials 74 zur Wirkung, da das unter Druck stehende, flüssige Speichermedium nun in diese Ausnehmungen entgegen den wirksamen Kapillarkräften eindringen kann und somit die Möglichkeit hat, sich entsprechend auszudehnen, so lange, bis das gesamte Speichermedium geschmolzen ist, um dann von den Kapillarkräften wiederum gleichmäßig in den für es vorgesehenen Innenraum mit Ausnahme der Längsnuten 22, der Ausnehmungen 54, der Zwischenräume des Kohlenstoffvlieses oder Gewebes 68 oder der Poren des Kohlenstoffschaummaterials 74 zurückgedrängt zu werden.

## Patentansprüche

1. Wärmespeicher, umfassend einen Speicherbehälter (12, 42, 62) mit einem zur Wärmeeinleitung vorgesehenen Wandbereich (14, 44, 46, 68, 74) mit einer Kapillarstruktur und ein in diesem Speicherbehälter (12, 42, 62) angeordnetes Speichermedium, dadurch gekennzeichnet, daß eine dem Speichermedium (36, 70) zugewandte Wandfläche (26, 56, 68, 74) des Wandbereichs aus einem vom Speichermedium (36, 70) nicht benetzbaren Material ist, daß der Wandbereich (14, 44, 46, 68, 74) mit zum Speichermedium (36, 70) hin offenen Ausnehmungen (22, 54) versehen ist, und daß in den Ausnehmungen (22, 54) einander zugewandte Wandflächen (30, 58) einen derartigen Abstand voneinander aufweisen, daß das Speichermedium (36, 70) aufgrund der Kapillarkräfte in diese im vollständig flüssigen Zustand nicht oder nur zu einem Teil eindringt.

2. Wärmespeicher nach Anspruch 1, dadurch gekennzeichnet, daß die einander zugewandten Wandflächen (30, 58) der Ausnehmungen (22, 54) im wesentlichen quer zu einer Oberfläche (38) des sich zwischen den Wandflächen (30, 58) erstreckenden Speichermediums (36, 70) verlaufen.

3. Wärmespeicher nach Anspruch 1 oder 2, dadurch gekennzeichnet, daß die Ausnehmungen (22, 54) in mindestens einer Richtung einen Abstand der Wandflächen (30, 58) aufweisen, welcher kleiner als ungefähr 6 mm ist.

4. Wärmespeicher nach Anspruch 3, dadurch gekennzeichnet, daß die Ausnehmungen (22, 54) in mindestens einer Richtung einen Abstand der Wandflächen (30, 58) aufweisen, welcher kleiner als ungefähr 4 mm ist.

5. Wärmespeicher nach Anspruch 4, dadurch gekennzeichnet, daß die Ausnehmungen (22, 54) in mindestens einer Richtung einen Abstand der Wandflächen (30, 58) aufweisen, welcher kleiner als ungefähr 2 mm ist.

6. Wärmespeicher nach Anspruch 5, dadurch gekennzeichnet, daß die Ausnehmungen (22, 54) in mindestens einer Richtung einen Abstand der Wandflächen (30, 58) aufweisen, welcher kleiner als ungefähr 1 mm ist.

7. Wärmespeicher nach einem der voranstehenden Ansprüche, dadurch gekennzeichnet, daß die Wandflächen (26, 56, 68, 74) Graphit umfassen.

8. Wärmespeicher nach Anspruch 7, dadurch gekennzeichnet, daß die Wandflächen (26, 56, 68, 74) aus Graphit sind.

9. Wärmespeicher nach einem der voranstehenden Ansprüche, dadurch gekennzeichnet, daß in eine die Wandfläche (26, 56, 68, 74) tragende Wand (14, 44, 46, 64) des Speicherbehälters (12, 42, 62) Metalle (34) eingelagert sind.

10. Wärmespeicher nach einem der voranstehenden Ansprüche, dadurch gekennzeichnet, daß in eine die Wandfläche (26, 56, 68, 74) tragende Wand (14, 44, 46, 64) des Speicherbehälters (12, 42, 62) keramische Fasern (32) eingelagert sind.

11. Wärmespeicher nach einem der voranstehenden Ansprüche, dadurch gekennzeichnet, daß eine die Wandfläche (26, 56, 68, 74) tragende Wand (14, 44, 46, 64) des Speicherbehälters (12, 42, 62) Graphit umfaßt.

12. Wärmespeicher nach einem der voranstehenden Ansprüche, dadurch gekennzeichnet, daß die Wandflächen (26, 56, 68, 74) Kohlestoffasern umfassen.

13. Wärmespeicher nach Anspruch 12, dadurch gekennzeichnet, daß die Wandflächen (26, 56, 68, 74) aus Kohlestofffasern sind.

14. Wärmespeicher nach einem der voranstehenden Ansprüche, dadurch gekennzeichnet, daß eine die Wandfläche (26, 56, 68, 74) tragende Wand (14, 44, 46, 64) des Speicherbehälters (12, 42, 62) Kohlestoffasern umfaßt.

15. Wärmespeicher nach einem der voranstehenden Ansprüche, dadurch gekennzeichnet, daß ein Innenraum (16, 50) des Speicherbehälters (12, 42) bis auf die Ausnehmungen (22, 54) mit Speichermedium (36) im vollständig flüssigen Zustand im wesentlichen gefüllt ist.

16. Wärmespeicher nach Anspruch 15, dadurch gekennzeichnet, daß der Innenraum (16, 50) des Speicherbehälters (12, 42) so weit gefüllt ist, daß das Speichermedium (36) im vollständig flüssigen Zustand geringfügig in die Ausnehmungen (22, 54) eindringt.

17. Wärmespeicher nach einem der voranstehenden Ansprüche, dadurch gekennzeichnet, daß der Wandbereich (14, 44, 46) Nuten (22, 54) aufweist.

18. Wärmespeicher nach einem der Ansprüche 1 bis 16, dadurch gekennzeichnet, daß der Wandbereich (44, 46) nebeneinander angeordnete, nicht zusammenhängende Vertiefungen (54') aufweist.

19. Wärmespeicher nach einem der voranstehenden Ansprüche, dadurch gekennzeichnet, daß der Wandbereich (64) mit porösem, vom Speichermedium nicht benetzbarem Material (68, 74) versehen ist.

20. Wärmespeicher nach Anspruch 19, dadurch gekennzeichnet, daß das poröse Material Kohlenstoffvlies (68) ist.

21. Wärmespeicher nach einem der voranstehenden Ansprüche, dadurch gekennzeichnet, daß dem Speichermedium (36, 70) zugewandte Kanten der Ausnehmungen (22, 54) abgerundet sind.

22. Wärmespeicher nach Anspruch 19 oder 20, dadurch gekennzeichnet, daß das poröse Material ein Gewebe (68) oder Gestrick ist.

23. Wärmespeicher nach Anspruch 19 oder 20, dadurch gekennzeichnet, daß das poröse Material vom Speichermedium nicht benetzbares, offenporiges Schaummaterial (74) ist.

24. Wärmespeicher nach Anspruch 23, dadurch gekennzeichnet, daß das Schaummaterial Graphitschaum (74) ist.

25. Wärmespeicher nach einem der voranstehenden Ansprüche, dadurch gekennzeichnet, daß Außenflächen (76) desselben mit einer oder mehreren Schutzschichten (78) aus Metall und/oder Keramik überzogen sind.

## Claims

1. Heat storage means comprising a storage container (12, 42, 62) with a wall region (14, 44, 46, 68, 74) provided for the introduction of heat and having a capillary structure and a storage medium arranged in this storage container (12, 42, 62), characterized in that a wall surface (26, 56, 68, 74) of the wall region facing the storage medium (36, 70) is made of a material not wettable by the storage medium (36, 70), that the wall region (14, 44, 46, 68, 74) is provided with recesses (22, 54) open towards the storage medium (36, 70), and that wall surfaces (30, 58) facing one another in the recesses (22, 54) are spaced from one another such that the storage medium (36, 70) will not or only partially penetrate them in the completely liquid state due to the capillary forces.

2. Heat storage means as defined in claim 1, characterized in that the facing wall surfaces (30, 58) of the recesses (22, 54) extend essentially transversely to a surface (38) of the storage medium (36, 70) extending between the wall surfaces (30, 58).

3. Heat storage means as defined in claim 1 or 2, characterized in that the space between the wall surfaces (30, 58) of the recesses (22, 54) in at least one direction is less than approximately 6 mm.

4. Heat storage means as defined in claim 3, characterized in that the space between the wall surfaces (30, 58) of the recesses (22, 54) in at least one direction is less than approximately 4 mm.

5. Heat storage means as defined in claim 4, characterized in that the space between the wall surfaces (30, 58) of the recesses (22, 54) in at least one direction is less than approximately 2 mm.

6. Heat storage means as defined in claim 5, characterized in that the space between the wall surfaces (30, 58) of the recesses (22, 54) in at least one direction is less than approximately 1 mm.

7. Heat storage means as defined in any of the preceding claims, characterized in that the wall surfaces (26, 56, 68, 74) comprise graphite.

8. Heat storage means as defined in claim 7, characterized in that the wall surfaces (26, 56, 68, 74) are made of graphite.

9. Heat storage means as defined in any of the preceding claims, characterized in that metals (34) are embedded in a wall (14, 44, 46, 64) of the storage container (12, 42, 62) bearing the wall surface (26, 56, 68, 74).

10. Heat storage means as defined in any of the preceding claims, characterized in that ceramic fibers (32) are embedded in a wall (14, 44, 46, 64) of the storage container (12, 42, 62) bearing the wall surface (26, 56, 68, 74).

11. Heat storage means as defined in any of the preceding claims, characterized in that a wall (14, 44, 46, 64) of the storage container (12, 42, 62) bearing the wall surface (26, 56, 68, 74) comprises graphite.

12. Heat storage means as defined in any of the preceding claims, characterized in that the wall surfaces (26, 56, 68, 74) comprise carbon fibers.

13. Heat storage means as defined in claim 12, characterized in that the wall surfaces (26, 56, 68, 74) are made of carbon fibers.

14. Heat storage means as defined in any of the preceding claims, characterized in that a wall (14, 44, 46, 64) of the storage container (12, 42, 62) bearing the wall surface (26, 56, 68, 74) comprises carbon fibers.

15. Heat storage means as defined in any of the preceding claims, characterized in that with the exception of the recesses (22, 54) an interior space (16, 50) of the storage container (12, 42) is essentially filled with storage medium (36) in the completely liquid state.

16. Heat storage means as defined in claim 15, characterized in that the interior space (16, 50) of the storage container (12, 42) is filled to such an extent that the storage medium (36) penetrates the recesses (22, 54) slightly in the completely liquid state.

17. Heat storage means as defined in any of the preceding claims, characterized in that the wall region (14, 44, 46) comprises grooves (22, 54).

18. Heat storage means as defined in any of claims 1 to 16, characterized in that the wall region (44, 46) comprises non-connected cavities (54') arranged next to one another.

19. Heat storage means as defined in any of the preceding claims, characterized in that the wall region (64) is provided with porous material (68, 74) not wettable by the storage medium.

20. Heat storage means as defined in claim 19, characterized in that the porous material is a non-woven carbon fabric (68).

21. Heat storage means as defined in any of the preceding claims, characterized in that edges of the recesses (22, 54) facing the storage medium (36, 70) are rounded off.

22. Heat storage means as defined in claim 19 or 20, characterized in that the porous material is a woven fabric (68) or knitted fabric.

23. Heat storage means as defined in claim 19 or 20, characterized in that the porous material is an open-pored foamed material (74) not wettable by the storage medium.

24. Heat storage means as defined in claim 23, characterized in that the foamed material is graphite foam (74).

25. Heat storage means as defined in any of the preceding claims, characterized in that outer surfaces (76) thereof are coated with one or several protective layers (78) of metal and/or ceramics.

## Revendications

1. Accumulateur thermique, comprenant un conteneur (12, 42, 62) avec une zone de paroi (14, 44, 46, 68, 74) de structure capillaire prévue pour l'introduction de la chaleur et un agent accumulateur disposé dans ce conteneur (12, 42, 62), caractérisé en ce que la surface de paroi (26, 56, 68, 74) est constituée en un matériau qui n'est pas mouillable par l'agent accumulateur (36, 70), en ce que la zone de paroi (14, 44, 46, 68, 74) est munie de cavités (22, 54) ouvertes en direction de l'agent accumulateur (36, 70) et en ce que les surfaces de paroi (38, 58) des cavités (22, 54) qui sont tournées les unes vers les autres présentent un écartement tel que l'agent accumulateur (36, 70) ne peut pas y pénétrer à l'état fluide, ou seulement partiellement, en raison des forces capillaires.

2. Accumulateur thermique selon la revendication 1, caractérisé en ce que les surfaces de paroi (30, 58) tournées les unes vers les autres des cavités (22, 54) sont orientées sensiblement transversalement à une surface (38) de l'agent accumulateur (36, 68) s'étendant entre les surfaces de paroi (30, 58).

3. Accumulateur thermique selon la revendication 1 ou 2, caractérisé en ce que les cavités (22, 54) comprennent dans au moins une direction un écartement entre leurs surfaces de paroi (30, 58) qui est inférieur à environ 6 mm.

4. Accumulateur thermique selon la revendication 3, caractérisé en ce que les cavités (22, 54) comprennent dans au moins une direction un écartement entre les surfaces de paroi (30, 58) qui est inférieur à environ 4 mm.

5. Accumulateur thermique selon la revendication 4, caractérisé en ce que les cavités (22, 54) comprennent dans au moins une direction un écartement entre les surfaces de paroi (30, 58) qui est inférieur à environ 2 mm.

6. Accumulateur thermique selon la revendication 4, caractérisé en ce que les cavités (22, 54) comprennent dans au moins une direction un écartement entre les surfaces de paroi (30, 58) qui est inférieur à environ 1 mm.

7. Accumulateur thermique selon l'une quelconque des revendications précédentes, caractérisé en ce que les surfaces de paroi (26, 56, 68, 74) comprennent du graphite.

8. Accumulateur thermique selon la revendication 7, caractérisé en ce que les surfaces de paroi (26, 56, 68, 74) sont constituées en graphite.

9. Accumulateur thermique selon l'une quelconque des revendications précédentes, caractérisé en ce que des métaux (34) sont incorporés dans une paroi (14, 44, 46, 64) du conteneur (12, 42, 62) supportant les surfaces de paroi (26, 56, 68, 74).

10. Accumulateur thermique selon l'une quelconque des revendications précédentes, caractérisé en ce que des fibres céramiques (32) sont incorporées dans une paroi(14, 44, 46, 64) du conteneur (12, 42, 62) supportant les surfaces de paroi (26, 56, 68, 74).

11. Accumulateur thermique selon l'une quelconque des revendications précédentes, caractérisé en ce qu'une paroi (14, 44, 46, 64) du conteneur (12, 42, 62) supportant les surfaces de paroi (26, 56, 68, 74) comprend du graphite.

12. Accumulateur thermique selon l'une quelconque des revendications précédentes, caractérisé en ce que les surfaces de paroi (26, 56, 68, 74) comprennent des fibres de carbone.

13. Accumulateur thermique selon la revendication 12, caractérisé en ce que les surfaces de paroi (26, 56, 68, 74) sont constituées par des fibres de carbone.

14. Accumulateur thermique selon l'une quelconque des revendications précédentes, caractérisé en ce qu'une paroi (14, 44, 46, 64) supportant les surfaces de paroi (26, 56, 68, 74) du conteneur (12, 42, 62) comprend des fibres de carbone.

15. Accumulateur thermique selon l'une quelconque des revendications précédentes, caractérisé en ce qu'un espace interne (16, 50) du conteneur (12, 42) est rempli avec l'agent accumulateur (36) essentiellement jusqu'aux cavités (22, 54).

16. Accumulateur thermique selon la revendication 15, caractérisé en ce que l'espace interne (16, 50) du conteneur (12, 42) est rempli jusqu'à ce que l'agent accumulateur (36) pénètre légèrement à l'état totalement fluide dans les cavités (22, 54).

17. Accumulateur thermique selon l'une quelconque des revendications précédentes, caractérisé en ce que la zone de paroi (14, 44, 46) comprend des encoches (22, 54).

18. Accumulateur thermique selon l'une quelconque des revendications 1 à 16, caractérisé en ce que la zone de paroi (44, 46) comprend des cavités (54') disposées les unes à côté des autres et non contiguës.

19. Accumulateur thermique selon l'une quelconque des revendications précédentes, caractérisé en ce que la zone de paroi (64) est munie d'un matériau poreux (68, 74) non mouillable par l'agent accumulateur.

20. Accumulateur thermique selon la revendication 19, caractérisé en ce que le matériau poreux est constitué par une nappe de carbone (68).

21. Accumulateur thermique selon l'une quelconque des revendications précédentes, caractérisé en ce que les bords des cavités (22, 54) qui sont tournées vers l'agent accumulateur (36, 70) sont arrondis.

22. Accumulateur thermique selon la revendication 19 ou 20, caractérisé en ce que le matériau poreux est constitué par un tissu (68) ou un tricot.

23. Accumulateur thermique selon la revendication 19 ou 20, caractérisé en ce que le matériau poreux est constitué par un matériau mousse (74) à pores ouverts et non mouillable par l'agent accumulateur.

24. Accumulateur thermique selon la revendication 23, caractérisé en ce que le matériau mousse est constitué par de la mousse de graphite (74).

25. Accumulateur thermique selon l'une quelconque des revendications précédentes, caractérisé en ce que les surfaces externes (76) de l'accumulateur sont recouvertes d'une ou plusieurs couches protectrices (78) en métal et/ou céramique.
